# EUROPEAN PATENT SPECIFICATION

(11) **EP 3 865 358 B1**
(45) Date of publication and mention of the grant of the patent: **10.01.2024**
(21) Application number: 20382107.9
(22) Date of filing: 13.02.2020
(51) Int. Cl.: B60T 17/02, B60T 13/52

(54) **VACUUM CONTROL SYSTEMS FOR BRAKE BOOSTERS**
VAKUUMSTEUERUNGSSYSTEME FÜR BREMSKRAFTVERSTÄRKER
SYSTÈMES DE COMMANDE SOUS VIDE POUR SERVOFREINS

(43) Date of publication of application: 18.08.2021
(73) Proprietor: Entecnia Consulting, S.L., 31014 Pamplona- Navarra (ES)
(72) Inventor: Sanz, Javier, 31014 Pamplona - Navarra (ES); Villanueva, Maria, 31014 Pamplona - Navarra (ES)
(74) Representative: Balder IP Law, S.L.

(56) References cited:
- CN-A- 110 435 617
- CN-A- 110 466 490
- DE-A1- 10 248 848
- DE-A1- 19 851 383
- US-A1- 2014 188 359

## Description

### TECHNICAL FIELD

The present invention belongs to the field of generation and control of vacuum in the automotive industry. More particularly, the invention refers to a vacuum control system for providing vacuum to, preferably, brake boosters where the vacuum control system comprises vacuum pumps that are able to operate in an alternate or combined manner based on detection of events. For example, these events may be related to an instant vacuum demand, a current vacuum level in the vacuum tank the vacuum pumps are providing vacuum to or the operation of the vacuum pumps themselves.

### STATE OF THE ART

Brake boosters, also named as vacuum servos, are components used in the braking system in motor vehicles to provide assistance to the driver by decreasing the braking effort the driver has to make to brake the vehicle. The brake boosters amplify/boost the mechanical effort of the brake pedal by use of a vacuum stored in a brake booster vacuum chamber. The brake boosters are normally placed between the brake pedal and the hydraulic master cylinder, using stored vacuum to amplify the driver pedal efforts, giving a greater braking force. Other subsystem of the motor vehicles that may need vacuum for its normal operation is the A/C system, the exhaust gas recirculation system or the central locking system, among others.

Vacuum pumps are devices that remove fluid molecules, e.g., gas molecules such as air molecules, from a sealed volume in order to leave behind a partial vacuum. These vacuum pumps may integrate a rotor housed inside a stator such that, when the rotor rotates, the vanes of the rotor transport the fluid load from the inlet of the stator to an outlet (exhaust) of the same stator creating an area of low pressure. Other type of vacuum pumps normally used in vehicles is the diaphragm vacuum pumps, although other types may be also used.

The vacuum for the brake boosters may be generated by vacuum pumps, wherein the vacuum generated in the vacuum pumps is directly transferred to the brake booster, or to an intermediate vacuum tank from which the brake boosters and other subsystems of the vehicle, such as the A/C system, may receive the vacuum, along non-collapsible vacuum lines, under demand. The vacuum may be stored in the brake booster vacuum chamber or in the intermediate vacuum tank by means of non-return valves.

As the brake system is safety related, vacuum pumps have to be designed to provide, to the brake boosters, the maximum vacuum demand of the vehicle braking system. Nevertheless, only in special circumstances (as safety critical situations for example) the vacuum must be generated in a short lapse of time. Thus, these braking systems, in normal operation, do not need to reach the defined vacuum level in so short time as in safety critical situations. Therefore, conventional vacuum systems usually comprise one single vacuum pump which is over-designed for normal operation to be able to cover the vacuum peak demands received from the devices to which said single vacuum pump is connected in a short lapse of time. These over-designed vacuum pumps are expensive, occupy big spaces and present high electricity consumptions resulting in an underused and inefficient equipment.

Moreover, vacuum systems for brake boosters are critical elements in terms of user's safety since the braking of the vehicle, in the event of the failure of the vacuum system, in particular the one single vacuum pump of the conventional vacuum systems, may be seriously compromised.

US 2014/188359 A1, CN 110 466 490 A and CN 110 435 617 A all disclose vacuum control systems for brake boosters, comprising a plurality of electric vacuum pumps fluidly connected to each other in parallel, wherein the plurality of vacuum pumps are fluidly connectable to a common outlet port of a vacuum tank for sucking air from the vacuum tank; and a processor configured to operate at least one first vacuum pump of the plurality of vacuum pumps to generate a first vacuum in the vacuum tank.

### DESCRIPTION OF THE INVENTION

The present invention provides a solution for the above-mentioned drawbacks by means of a vacuum control system for brake boosters and a method for generating vacuum for brake boosters according to independent claims 1 and 9, respectively. Preferred embodiments of the invention are defined in dependent claims.

A first object of the invention is a vacuum control system that comprises a plurality of electric vacuum pumps fluidly connected to each other in parallel. While the plurality of vacuum pumps are fluidly connected in parallel, i.e., the plurality of vacuum pumps are configured to create vacuum in the same vacuum tank and are therefore, connected in parallel to the vacuum tank, their operation can be performed in parallel, when the vacuum pumps operate individually in an alternate way or when one of the vacuum pumps fails, or in series, when the vacuum pumps operate simultaneously, providing the individual or combined vacuum generation capability to the vacuum tank, respectively. The vacuum pumps of the plurality of vacuum pumps are fluidly connectable to a common outlet port, e.g., an outlet opening or tube, of the vacuum tank for sucking air from the vacuum tank. As used herein, the vacuum tank may refer to the vacuum tank of the brake booster (the vacuum tank of the brake booster may comprise the brake booster vacuum chamber and the brake booster pressure chamber) such that the vacuum pumps generate vacuum directly into the brake booster or may refer to an intermediate vacuum tank that provides vacuum to the brake boosters and to other subsystems of the vehicle such as the Air Conditioning (AC) subsystem.

For example, each vacuum pump of the plurality of vacuum pumps may comprise a pump chamber comprising a base and a stator that define an inner space, and a rotor housed in the inner space of the respective pump chambers. In turn, the rotors may comprise at least one slot and at least one vane, each vane being at least partially introduced in one of the slots of the rotors. Each vacuum pump of the plurality of vacuum pumps further comprises an electric motor having a drive shaft passing through a respective central opening of the base to drive the corresponding rotor. The vacuum pumps may comprise at least one inlet port (an individual inlet port for each vacuum pump or a shared inlet port and wherein the inlet port may be an opening or tube, among others) for sucking air from the vacuum tank, the at least one inlet port being in fluid communication with respective inlet holes of the pump chambers, and at least one outlet port (an individual outlet port for each vacuum pump or a shared outlet port and wherein the outlet port may be an opening or tube, among others) for discharging compressed air exiting the pump chambers through at least one outlet hole of the respective pump chambers. For example, the vacuum pumps may be directly connected to the vacuum tank of the brake booster or by interposition of a vacuum tank where vacuum is stored and that may provide vacuum to the brake booster and to subsystems of the vehicle others than the brake system. These connections may be carried out by, for example, non-collapsible vacuum lines such as flexible sleeves, tubes or pipes, etc. Alternatively, the vacuum pumps may be any other kind of vacuum pump, such as diaphragm vacuum pumps, etc., that is able to provide vacuum to the vacuum tank.

The vacuum control system further comprises a processor configured to operate at least one first vacuum pump of the plurality of vacuum pumps to generate a first vacuum in the vacuum tank, and upon detecting an event, operate at least a second vacuum pump of the plurality of vacuum pumps to generate a second vacuum in the vacuum tank in an alternate mode with the at least one first vacuum pump. The event is related to at least one of an instant vacuum demand, a vacuum level in the vacuum tank, an operation of the vacuum pumps, a reception of signals from devices communicatively coupled to the vacuum control system and an operation of the devices.

Alternatively and upon detection of an event, the processor is configured to simultaneously operate the at least one second vacuum pump to generate a second vacuum in the vacuum tank with the at least one first vacuum pump, wherein in this case the event is selected from a group comprising: a starting of a vehicle incorporating the vacuum control system, a reception of a signal indicating an emergency brake of the vehicle, a projected vacuum level within the vacuum tank reaching a critical vacuum level, the at least one first vacuum pump operating under extreme conditions and a total or particle failure of measurement or control sensors of the vacuum control system.

Thus, the vacuum control system is configured to operate the vacuum pumps in an alternate manner or in a combined manner based on the detection of particular events, wherein these events may be, for example, related to an instant (current or projected) vacuum demand (e.g., an abrupt brake of the vehicle may require a quick vacuum demand), a (current or projected) vacuum level in the vacuum tank the vacuum pumps are providing vacuum to (e.g., the vacuum level in the vacuum tank may be lower than a predefined threshold), the operation of the vacuum pumps (e.g., correct operation, operation under extreme conditions, total or partial failure of the vacuum pump, malfunctioning of the vacuum pumps or the vacuum pump having reached a predefined number of working hours or switches, etc.), a reception of signals from devices communicatively coupled to the vacuum control system (e.g., signals received from measurement or control sensors sending data to the vacuum control system) and an operation of these devices (e.g., a failure in any of these sensors from which the vacuum control system receives control or measurement signals), among other events. Preferably, the processor is configured to simultaneously or alternatively operate the vacuum pumps until a targeted vacuum level in the vacuum tank is reached. As used herein, the targeted vacuum level may refer to a maximum predefined vacuum level that the vacuum control system is able to reach within the vacuum tank (the higher the better). This targeted vacuum level ensures a proper functioning of the subsystems of the vehicle that receive vacuum from the vacuum tank and is high enough to allow a certain reduction of the vacuum level relative to the targeted vacuum level while the remaining vacuum level is still within predefined safety margins. For example, these safety margins may be delimited by the targeted vacuum level corresponding to the upper margin and a minimum vacuum level corresponding to the lower margin. As used herein, the minimum vacuum level may refer to the minimum predefined vacuum level in the vacuum tank that guarantees that the systems demanding vacuum from the vacuum tank can be provided with vacuum without compromising the operation of said systems.

By way of example, the targeted vacuum level for the brake boosters to operate optimally may correspond to a negative pressure in the vacuum tank of -700 mbar (300 mbar absolute pressure) while the minimum vacuum level may correspond to - 500 mbar (500 mbar absolute pressure). Preferably, the targeted vacuum level may correspond to a pressure in the vacuum tank of -800 mbar (200 mbar absolute pressure), that improves brake system efficiency, while the minimum vacuum level may correspond to -650 mbar (350 mbar absolute pressure). These vacuum level thresholds may be previously determined by the vehicle manufacturer and may differ from one braking design to another. Moreover, the vacuum control system may also monitor other parameters such as time. The conversion between relative and absolute pressure in the vacuum tank along the present invention have been obtained for a 1000 mbar of atmospheric pressure.

In some embodiments, the event is selected from a group comprising: a total or partial failure or an abnormal operation in a vacuum pump of the at least one first vacuum pump, at least one vacuum pump having reached a predefined number of working hours or switches and a current vacuum level within the vacuum tank falling below the minimum vacuum level, among other events. The minimum vacuum level is lower than the targeted vacuum level. When this particular event is detected by the processor, for example a signal may be received at the processor from a vacuum sensor located within the vacuum tank indicating that the vacuum level is lower than the preestablished minimum vacuum level, or an abnormal behaviour of one of the vacuum pumps that is being currently operated is detected, the processor is configured to operate the at least one second vacuum pump and disable the at least one first vacuum pump.

In such embodiments, when the vacuum pumps operate normally, the vacuum control system may be configured to operate at least one first vacuum pump of the plurality of vacuum pumps to generate a first vacuum in the vacuum tank until the vacuum level in the vacuum tank reaches a first threshold corresponding to the targeted vacuum level. At this point, the at least one first vacuum pump is disabled. Then, the vacuum control system may be further configured to monitor at least the vacuum level in the vacuum tank and, upon detecting the vacuum level falling below a second threshold corresponding to the minimum vacuum level, operate at least one second vacuum pump of the plurality of vacuum pumps to generate a second vacuum in the vacuum tank until the vacuum level in the vacuum tank reaches the first threshold. This operating mode alternates the functioning of the vacuum pumps. Since the one or more vacuum pumps used for reaching the first threshold are deactivated once the vacuum tank has reached its targeted vacuum level, when the current vacuum level falls below the minimum vacuum level other vacuum pumps, different from the vacuum pumps used to previously reach the first threshold, are operated to recover said targeted vacuum level. This operating mode may, for example, extend the operational life of the vacuum pumps and thus, of the vacuum control system.

In addition, when the processor detects the abnormal operation of the vacuum pumps currently providing vacuum to the vacuum tank, the processor may disable the malfunctioning pump (this malfunctioning may be due to a partial failure of the pump, a total failure of the pump, a pump that does not start, a problem with the airflow or power supply for the pump, etc.) and operate (switch) another vacuum pump of the plurality of vacuum pumps. Moreover, when the abnormal operation of a vacuum pump is detected, the processor may trigger an alarm to warn about this malfunctioning.

In some other embodiments, which are not part of the invention, the event is selected from a group comprising: a current vacuum level within the vacuum tank reaching a critical vacuum level, the critical vacuum level being lower than the minimum vacuum level, a current vacuum level in the vacuum tank being lower than expected after lapse of a predetermined period of time, and a failure in a vacuum pump of the at least one first vacuum pump, among other particular events. As used herein, the critical vacuum level refers to a critical predefined vacuum level in the vacuum tank that may do not ensure that the systems demanding vacuum from the vacuum tank can be provided with vacuum without compromising the operation of said systems. For example, the processor may receive a signal from the vacuum sensor indicating that the vacuum level is equal or lower than the critical vacuum level so that more than one vacuum pump is operated simultaneously in order to reach the targeted vacuum level in the shortest time. In some embodiments, the processor may simultaneously operate more than one vacuum pump when the vehicle starts and independently of the current vacuum level in the vacuum tank. In other examples, the vacuum level may reach the critical vacuum level due to an abnormal behaviour of a vacuum pump, due to a vacuum leak in the braking system or due to a high vacuum demand so that more than one vacuum pump is operated simultaneously to recover the targeted vacuum level in the shortest time.

In addition, under certain circumstances, such as safety critical situations, the vacuum control systems may need to reach the targeted vacuum level, or at least the minimum vacuum level, in the shortest period of time for which the vacuum control system may operate the vacuum pumps currently in operation along with additional vacuum pumps. The combined vacuum generation capability of the vacuum pumps will reduce the time required for reaching the targeted vacuum level or the minimum vacuum level. Besides, under certain circumstances, e.g. the processor receives a signal indicating an instant quick vacuum demand, the processor may operate the at least one first vacuum pump and the at least one second vacuum pump although the current vacuum level is between the targeted and the minimum vacuum level in order to ensure that the vacuum level does not drop below the minimum vacuum level or to accelerate reaching the targeted vacuum level.

In some other embodiments, the vacuum control system, and more particularly the processor, may be configured to further monitor time and, when a predefined period of time has lapsed and a current vacuum level in the vacuum tank is lower than the first threshold, simultaneously operate the at least one first vacuum pump and the at least one second vacuum pump of the plurality of vacuum pumps until the vacuum level in the vacuum tank reaches the first threshold. The processor may comprise a timer to monitor time or may receive a signal form a timer that may belong to any other subsystem of the vehicle. In these embodiments, the processor may operate one or more of the vacuum pumps during the predefined period of time, e.g., 5 seconds, in order to reach the targeted vacuum level, but if after lapse of the 5 seconds the current vacuum level in the vacuum tank is lower than the first threshold, then the vacuum control system may simultaneously operate the vacuum pumps currently in operation along with additional vacuum pumps. The combined vacuum generation capability of the vacuum pumps will ensure the targeted vacuum level is reached as quickly as possible.

In some other embodiments, the processor is configured to receive at least one signal, the signal indicating an emergency brake and, upon reception of the signal, simultaneously operate the at least one first vacuum pump and the at least one second vacuum pump of the plurality of vacuum pumps until the vacuum level in the vacuum tank reaches at least the second threshold, and preferably the first threshold. In the event of an emergency brake, the processor may activate more than one vacuum pump in order to recover the targeted vacuum level, or even a higher vacuum level (the higher the better), as quickly as possible. The signal received may indicate, for example, that the proximity sensor of the vehicle has been activated which would be indicating the need of braking the vehicle, a power signal of the brake pedal indicating an abrupt braking or any other signal that indicates an emergency braking.

In some embodiments, the vacuum control system may be further configured to detect a failure in at least one particular vacuum pump and, upon detecting the failure, enable operation of at least another vacuum pump of the plurality of vacuum pumps and trigger an alarm informing the failure in the at least one particular vacuum pump. The alarm will inform the driver of the vehicle about the partial failure or degraded performance of the braking system. This alarm may be, for example, an indicator light in the vehicle panel board or a sound. Thus, the vacuum control system may be provided with a system failure detection and warning ability, at the same time than a redundant vacuum assembly that may assure that there could be at least one operational vacuum pump for the brake booster and other subsystems demanding vacuum of the vehicle at any time. For example, the vacuum control system may be adapted to detect the failure based on at least one signal from: a timer (that measures the time to reach a predefined vacuum level in the vacuum tank), a temperature sensor in the vacuum pumps (reaching a high temperature in the vacuum pump may damage any of its components, especially the motor), a current sensor in the vacuum pump (the sensor may detect the lack of current or a overcurrent in the vacuum pumps), a flow sensor located at the outlet port or inlet port of the vacuum pumps (this sensor may detect lack of fluid flow in the outlet or inlet port which may be provoked by a failure in the vacuum pump), among others.

In some embodiments, the vacuum control system may comprise a vacuum sensor located in the vacuum tank. The vacuum sensor may be configured to monitor the current vacuum level in the vacuum tank. Thus, the vacuum sensor may generate a signal representing the current vacuum level in the vacuum tank that may be sent to the vacuum control system in a continuous basis or periodically, e.g., every 5 milliseconds.

In some embodiments, the processor may be integrated within an Electronic Control Unit (ECU) that is configured to carry out all the functionalities of the vacuum control system. In particular, the ECU may be configured to receive the measures from the vacuum sensor and from other devices of the vehicle and to operate the at least one first vacuum pump and the at least one second vacuum pump of the plurality of vacuum pumps based on the received measures. Thus, the ECU, in addition to other functionalities, may be configured to decide the operation mode of the plurality of vacuum pumps, alternate or simultaneous operating mode, and may decide which vacuum pump should be operated. The ECU decision may be based on signals received from different sensors, including the vacuum sensor and the proximity sensor, and other information from the vehicle such as information from a timer or the braking pedal, among other elements. The signals received at the ECU may be transmitted via the CAN bus or any other communications protocol of the vehicle. This ECU may be exclusive for the braking system of the vehicle or may be an ECU in charge of managing different subsystems of the vehicle, including the braking system.

As used herein the ECU may refer to any combination of hardware and software logic for implementing all the functionalities of the vacuum control system. The ECU may comprise a microcontroller, memories such as SRAM, EEPROM, Flash memories, etc., inputs such as supply voltage, digital inputs, etc., outputs such as actuator drivers, logic outputs, etc., communication links and embedded software, among other components. The ECU may further implement functionalities of one or more of the electrical systems or subsystems in a vehicle, such as suspension, engine, transmission, among others. For example, the ECU may be in charge of managing the vacuum control system and the anti-lock braking system (ABS) of the vehicle.

In some embodiments, the plurality of vacuum pumps may be coupled to each other by an intermediate flange located between, for example, the respective bases of the pump chambers and the motors. This intermediate flange may have different geometries depending on the particular requirements of the vehicle on which the vacuum control system is to be mounted. The ECU may be removably coupled to this intermediate flange. Then, the plurality of vacuum pumps, for example two, three or more vacuum pumps, can be independent vacuum pumps that are fluidly connected to the vacuum tank by independent vacuum lines or by interconnected vacuum lines (e.g., interconnected vacuum lines with bypass or non-return valves that allow operating said vacuum pumps in parallel or in series) or may be coupled to each other by the intermediate flange. While coupling the vacuum pumps to each other by the intermediate flange provides a more compact solution that saves space and installation costs, having vacuum pumps mechanically independent from each other allows installing the individual vacuum pumps in small remaining spaces in the engine compartment results in a more adaptable and efficient solution specially in those vehicles where lack of space in the engine compartment could be a problem.

In some embodiments, the intermediate flange may comprise one or more inlet ports (e.g., inlet openings or tubes, among others) and one or more intermediate conduits, the intermediate conduits being in fluid communication with the inlet ports and with the inlet holes of the pump chambers of the vacuum pumps coupled to the intermediate flange. For example, the intermediate flange may have one inlet port for each vacuum pump and a corresponding intermediate conduit to fluidly communicate each inlet port with a respective vacuum pump. In some other examples, the intermediate flange may have one inlet port and one intermediate conduit to fluidly communicate the inlet port with all the pump chambers of the vacuum pumps coupled to the intermediate flange.

In some embodiments, the intermediate flange, and more particularly the intermediate conduits of the intermediate flange, may comprise flow control means configured to let airflow to pass from the vacuum tank to the pump chamber of at least one of the plurality of vacuum pumps and to prevent airflow in the opposite direction. Alternatively, the flow control means may be located in the vacuum lines that fluidly connect the vacuum tank to the plurality of vacuum pumps. Having these flow control means in the vacuum lines may be useful, for example, in embodiments in which there is no intermediate flange or in those in which the intermediate is a solid piece not having internal conduits.

In some embodiments, the flow control means may be, for example, non-return valves, switchable valves, electronic valves or bypass valves, among others, which could be integrated within the vacuum control system allowing a single piping connection between the vacuum pumps and the brake booster. The flow control means may let fluid flow pass from the vacuum tank towards the at least one vacuum pump that is being operated in the alternate operating mode or to the vacuum pumps that are being operated in the simultaneous operating mode and prevent fluid flow in the opposite direction. Thus, the vacuum control system is configured to, by means of the flow control means, let or prevent airflow to pass based on the vacuum pumps that are being operated at any moment.

In some embodiments and depending on the vacuum control system design and the brake booster vacuum demand, all the vacuum pumps of the plurality of vacuum pumps may have the same vacuum capacity. In some other embodiments, the vacuum pumps may have different vacuum capacities.

Another object of the present invention is a method for generating vacuum for a brake booster that makes use of the vacuum control system as previously described. The method comprises providing a plurality of electric vacuum pumps fluidly connected to each other in parallel. The plurality of vacuum pumps is also fluidly connectable to a common outlet port of a vacuum tank for sucking air from the vacuum tank. The vacuum tank may be the vacuum tank of the brake booster or an intermediate vacuum tank from which the brake booster and any other subsystem of the vehicle, such as the AC subsystem, may receive vacuum.

For example, the plurality of vacuum pumps may be controlled by an ECU that may be exclusive for the vacuum pumps or that may implement additional functionalities for managing other subsystems of the vehicle in which the ECU is installed. In turn, each vacuum pump of the plurality of vacuum pumps may comprise a pump chamber comprising a base and a stator defining an inner space, and a rotor housed in the inner space of the pump chamber. The rotor may comprise at least one slot and at least one vane, each vane being at least partially introduced in one of the slots of the rotor. Each vacuum pump of the plurality of vacuum pumps may further comprise an electric motor having a drive shaft passing through a respective central opening of the base to drive the corresponding rotor. Moreover, the plurality of vacuum pumps may comprise at least one inlet port for sucking air from a vacuum tank, the inlet port being in fluid communication with a respective at least one inlet hole of the pump chambers of the plurality of vacuum pumps, and at least one outlet port for discharging compressed air exiting the pump chambers of the plurality of vacuum pumps through at least one outlet hole of the respective pump chambers.

The method further comprises operating at least one first vacuum pump of the plurality of vacuum pumps to generate a first vacuum in the vacuum tank and upon detecting an event, operating at least one second vacuum pump of the plurality of vacuum pumps to generate a second vacuum in the vacuum tank in an alternate mode with the at least one first vacuum pump. In such case, the events are related to at least one of an instant (current or projected) vacuum demand, an instant (current or projected) vacuum level in the vacuum tank, an operation of the vacuum pumps, a reception of signals from devices (e.g., control and measurement sensors) communicatively coupled to the vacuum control system and an operation of said devices, among other events. Alternatively, upon detecting an event, the method comprises simultaneously operating the at least one second vacuum pump to generate a second vacuum in the vacuum tank with the at least one first vacuum pump. In such case, the event is selected from a group comprising: a starting of a vehicle incorporating the vacuum control system, a reception of a signal indicating an emergency brake of the vehicle, a projected vacuum level within the vacuum tank reaching a critical vacuum level, the at least one first vacuum pump operating under extreme conditions and a total or particle failure of measurement or control sensors of the vacuum control system. The vacuum pumps may be simultaneously or alternatively operated until the targeted vacuum level in the vacuum tank is reached.

In some embodiments, when the particular event is selected from a group comprising a failure in a vacuum pump of the at least one first vacuum pump, at least one vacuum pump having reached a predefined number of working hours or switches, and a current vacuum level within the vacuum tank falling below a minimum vacuum level within the vacuum tank, the minimum vacuum level being lower than the targeted vacuum level, the method comprises operating the at least one second vacuum pump and disable the at least one vacuum pump (alternate operation).

In some embodiments, which are not part of the invention, when the event is selected from a group comprising a vacuum level within the vacuum tank reaching a critical vacuum level, the critical vacuum level being lower than the minimum vacuum level, a current vacuum level in the vacuum tank being lower than expected after lapse of a predetermined period of time and a partial failure in a vacuum pump of the at least one first vacuum pump, the method comprises simultaneously operating the at least one first vacuum pump and the at least one second vacuum pump. Then, the method comprises, upon detection of a current vacuum level inside the vacuum tank being lower than any one of the targeted vacuum level and the minimum vacuum level, simultaneously operating the at least one vacuum pump and the at least another vacuum pump of the plurality of vacuum pumps.

For example, the vacuum control system may monitor, by means of a vacuum sensor, the vacuum level inside the vacuum tank, and upon detecting the vacuum level reaching a third threshold (corresponding to the critical vacuum level), the vacuum control system simultaneously operates at least one second vacuum pump of the plurality of vacuum pumps to generate a second vacuum in the vacuum tank until the vacuum level in the vacuum tank reaches the first threshold (corresponding to the targeted vacuum level).

In some embodiments, when the processor detects a failure in a vacuum pump of the at least one vacuum pump, the method comprises triggering an alarm informing of the failure in the at least one particular vacuum pump.

In some embodiments, which are not part of the invention, the method comprises monitoring time and, when a predefined period of time has lapsed and a current vacuum level in the vacuum tank is lower than the lower than the minimum vacuum level or the targeted vacuum level, simultaneously operating the at least one first vacuum pump and the at least one second vacuum pump of the plurality of vacuum pumps until the vacuum level in the vacuum tank reaches the targeted vacuum level.

In some embodiment, prior to operating the at least one first vacuum pump of the plurality of vacuum pumps to generate a first vacuum in the vacuum tank, the method comprises monitoring detection of an event to trigger the operation of said at least one first vacuum pump. For example, any event related to at least one of an instant vacuum demand, a current vacuum level in the vacuum tank or an operation of the vacuum pumps, among other events may trigger the operation of the first vacuum pump.

As used herein, terms "at least one first vacuum pump" and "at least one second vacuum pump" may indistinctly refer to one or more of any one of the vacuum pumps of the plurality of vacuum pumps of the vacuum control system.

The vacuum control system for brake boosters and the method for generating vacuum for brake boosters present several advantages and/or differences compared with previous devices. In particular, it provides a system failure detection and warning ability at the same time that is a redundant system which allows ensuring that there will be at least one operational vacuum pump ready to generate vacuum within the brake booster at any time, incrementing safety of the brake assembly. The vacuum control system further extends the operational life of the vacuum pumps and reduces current consumption when functioning in the alternate operating mode (more than 85% of the lifetime of vacuum control system) which is extremely important for battery powered vehicles. It is also able to adapt its vacuum generation capacity to a varying demand from the brake booster the vacuum control system is connected to. Accordingly, the vacuum control system will neither be under-designed nor over-designed, even if the vacuum demand of brake booster changes over time. In addition, the vacuum control system herein described is flexible, easily controllable and low-cost incurring being equally suitable for different applications having different vacuum requirements, without special service interventions. It is also a compact solution that allows installing the vacuum pumps in residual spaces of the engine compartment using the available space in the vehicle in a more efficient manner.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out.

The drawings comprise the following figures:
Figures 1A, 1B and 1C show different perspective views of an example vacuum control system according to a particular embodiment of the invention.
Figure 2 shows a perspective view of the motors and a lower portion of the intermediate flange of the vacuum control system of Figure 1.
Figures 3A and 3B show perspective views of an upper portion of the intermediate flange of the vacuum control system of Figure 1.
Figure 4 shows a schematic view of a vacuum control system according to a particular embodiment of the invention.
Figure 5 shows a flow diagram of a method for generating vacuum in a vacuum tank, according to a particular embodiment of the invention.
Figure 6 shows a flow diagram of a method for generating vacuum in a vacuum tank using the alternate operation mode, according to a particular embodiment of the invention.
Figure 7 shows a graph of the operation of the vacuum control system of Figure 1 in its alternate operating mode.
Figure 8 shows a flow diagram of a method for generating vacuum in a vacuum tank using the simultaneous operation mode, according to a particular embodiment of the invention.
Figure 9 shows a graph of the operation of the vacuum control system of Figure 1 in its simultaneous operating mode.
Figure 10 shows a flow diagram of a method for generating vacuum in a vacuum tank according to another particular embodiment of the invention.
Figure 11 shows a graph of the operation of the vacuum control system of Figure 1 in its simultaneous mode and further monitoring time.

### DETAILED DESCRIPTION OF THE INVENTION

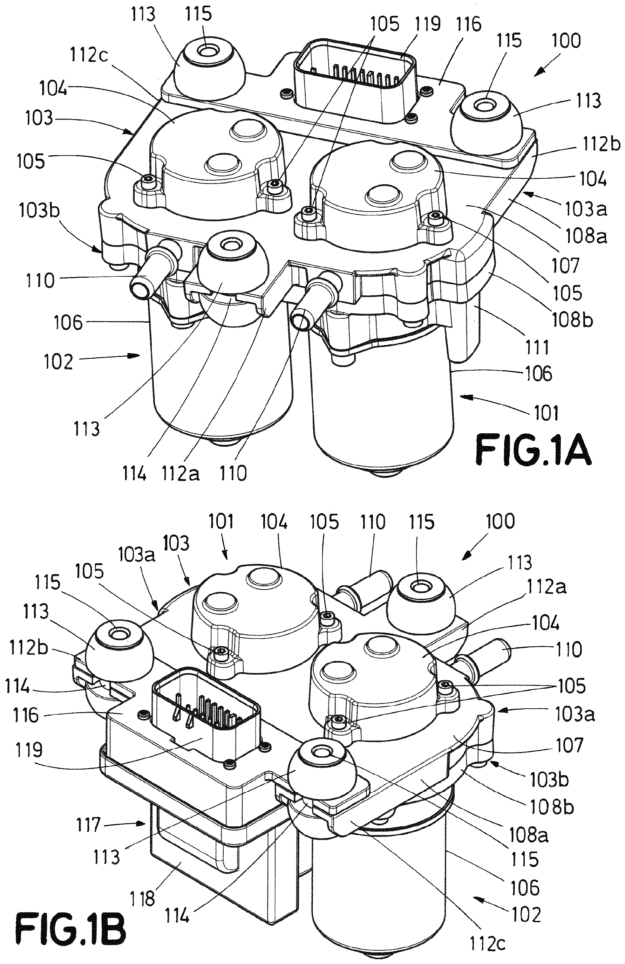

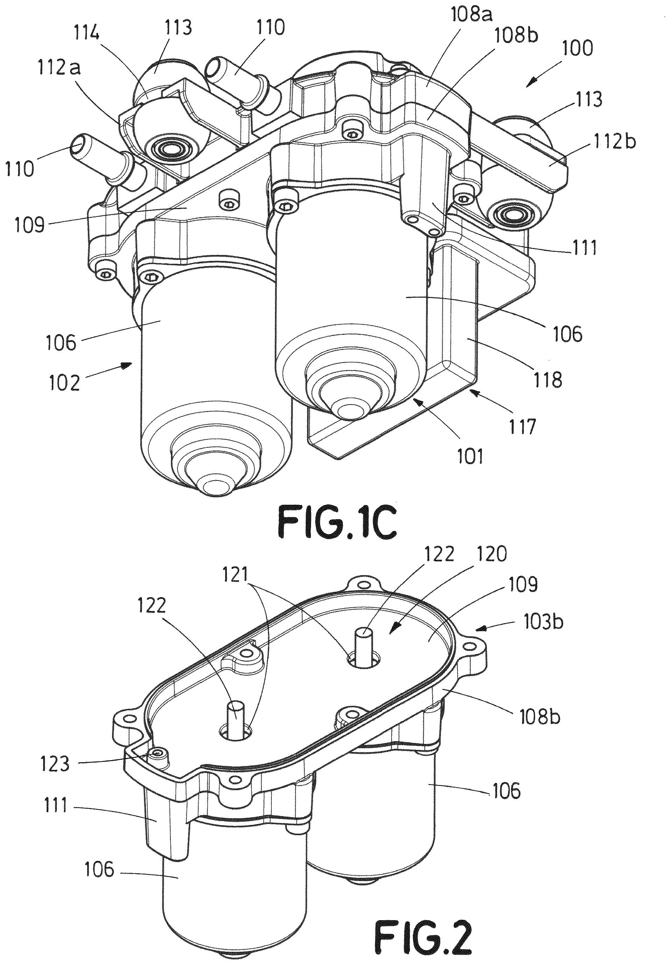

Figures 1A, 1B and 1C show different perspective views of an example vacuum control system 100. In particular, figure 1A shows an upper front perspective view of the vacuum control system 100, figure 1B shows a rear perspective view of the vacuum control system 100 and figure 1C shows a lower front perspective view of the vacuum control system 100. It should be understood that the vacuum control system 100 depicted in Figure 1 may include additional components and that some of the components described herein may be removed and/or modified without departing from a scope of the vacuum control system 100.

The vacuum control system 100 is formed by two vacuum pumps 101-102 fluidly connected to each other in parallel by means of an intermediate flange 103. Each vacuum pump 101-102 comprises a pump chamber defined by the intermediate flange 103 that acts as the base of the pump chambers and a respective stator 104. The stators 104 are attached to the intermediate flange 103 by screw elements 105. The pump chambers house a respective rotor (not shown), e.g., a circular rotor. These rotors comprise at least one slot and at least one vane being at least partially introduced in the slot of the rotor.

Each vacuum pump 101-102 also comprises a respective motor 106, e.g., an electric motor, having a drive shaft (not shown in this figure) to drive the corresponding rotors. The intermediate flange 103 is located between the pump chambers and the motors 106. The intermediate flange 103 comprises an upper portion 103a and a lower portion 103b that define an intermediate chamber (not shown in this figure). The upper portion 103a has an upper wall 107 which defines the base of the pump chambers and an upper side wall 108a and the lower portion 103b has a bottom wall 109 and a lower side wall 108b.

The vacuum control system 100 comprises two inlet tubes 110 for sucking air from a vacuum tank (not shown in this figure). The vacuum tank may be the vacuum tank of the brake booster or an intermediate vacuum tank from which the brake booster and any other subsystem of the vehicle, such as the AC subsystem, may receive vacuum. The inlet tubes 110 are in fluid communication with at least one vacuum connection, e.g. an outlet tube, of the vacuum tank by interposition of, for example, flexible tubes. Alternatively, the vacuum control system 100 may have one single inlet tube 110 in fluid communication with the vacuum tank. The inlet tubes 110 are connected to the upper side wall 108a of the intermediate flange 103 and are in fluid communication with at least one inlet hole (not shown) of the pump chambers through at least one intermediate conduct (not shown) housed at least partially in the intermediate flange 103. The inlet holes can be placed in the area of the upper wall 107 of the intermediate flange 103 which constitutes the bases of the pump chambers.

The vacuum control system 100 further comprises at least one outlet tube 111 in fluid communication with respective outlet holes (not shown) of the pump chambers. The compressed air exiting the pump chambers of the corresponding vacuum pumps 101-102 enters in the intermediate chamber of the intermediate flange 103 through at least one outlet hole 127 located in the areas of the upper wall 107 of the intermediate flange 103 which constitutes the base of the respective pump chambers. This compressed air existing the pump chambers enters in the intermediate chamber and is expelled to the outside via the at least one outlet tube 111. Alternatively, the outlet tubes may be directly and fluidly connected to the pump chambers to expel the compressed air to the outside. While the example vacuum control system 100 in figure 1 shows one outlet tube 111, the vacuum control system 100 may comprise two outlet tubes 111, one outlet tube in fluid communication with each pump chamber of the respective vacuum pumps 101-102.

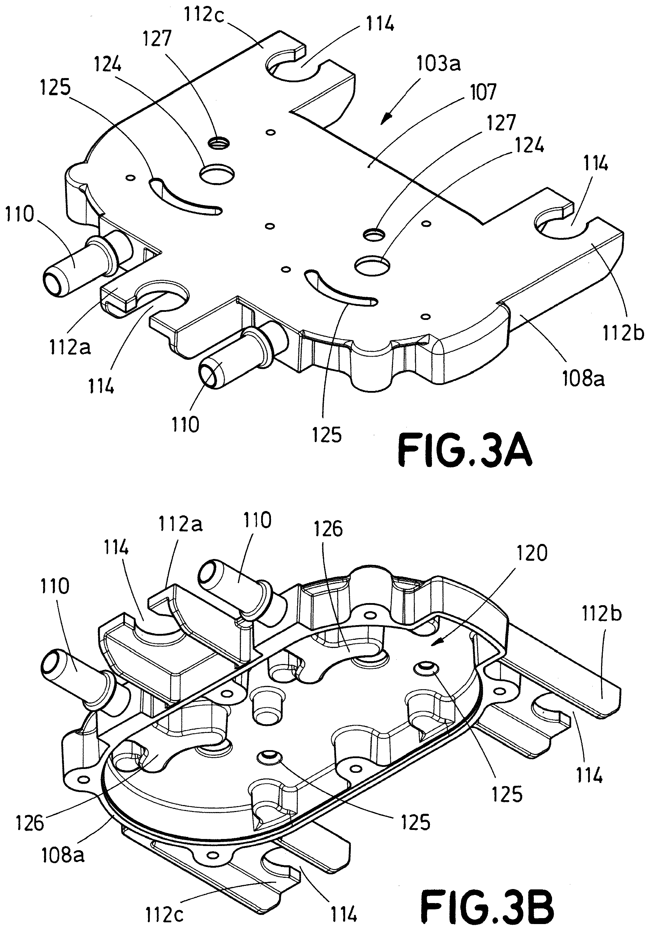

In such example, the intermediate conduct is completely housed inside the intermediate flange 103, as represented in figure 3.

The intermediate flange 103 further comprises three mounting brackets 112 on which rubber mounts 113 are respectively inserted. Specifically, the intermediate flange 103 has a first mounting bracket 112a located between the two inlet tubes 110 and a second and a third mounting bracket 112b-112c located at the opposite edge of the intermediate flange 103 and in correspondence with its corners. The rubber mounts 113 are inserted into recesses 114 of the mounting brackets 112 together with sleeve elements 115 to be assembled in the mounting brackets 112. These sleeve elements 115 are to insert screws, bolts or similar, to couple the intermediate flange 103 to the structure of the vehicle on which it is to be mounted.

The mounting brackets 112b and 112c are also to attach a mounting portion 116 to which an ECU 117 may be coupled to. The ECU 117 is within a casing 118 and has a connector 119 to connect the electronic components of the ECU 117 to the electric motors 106 of the vacuum pumps 101-102, to the vacuum sensor in the brake booster, to the battery of the vehicle, to the CAN bus of the vehicle, to any other information network of the vehicle and/or to some other sensors and devices within the vehicle, such as the proximity sensors or the brake pedal. The ECU may further comprise a timer to monitor time.

Figure 2 shows a perspective view of the motors 106 and the lower portion 103b of the intermediate flange 103 of the vacuum control system 100 of Figure 1.

In such example, the lower portion 103b comprises the bottom wall 109 and the lower side wall 108b. The lower portion 103b of the intermediate flange 103 has a substantially oval shape with two openings 121 substantially located in the focus of the oval. The two openings 121 are to allow the respective drive shafts 122 of the motors 106 to pass through to drive the corresponding rotors. The upper wall 107 of the upper portion 103a of the intermediate flange 103 will also have these two openings in corresponding locations. While the intermediate flange 103 has a substantially oval shape in this embodiment, the shape of the intermediate flange 103 may depend on the particular implementation of the vacuum control system 100. For example, the shape of the intermediate flange 103 may have substantially rectangular shape, among other possible geometries.

The bottom wall 109 has one opening 123 that communicate the outlet tube 111 with the intermediate chamber 120 that, in turn, is in fluid communication with the outlet holes of the pump chambers. In this way, the air compressed in the pump chambers exits through the respective outlet holes and enters in the intermediate chamber 120 exiting the intermediate flange 103 via the opening 123 towards the outlet tube111.

Figures 3A and 3B show perspective views of the upper portion 103a of the intermediate flange 103 of the vacuum control system 100 of Figure 1. In particular, figure 3A shows an upper perspective view of the upper portion 103a of the intermediate flange 103, and Figure 3B shows a lower perspective view of the upper portion 103a of the intermediate flange 103.

The upper portion 103a of the intermediate flange 103 has the upper wall 107 and the upper side wall 108a. The upper portion 103a has two openings 124 the drive shafts of the rotors are to pass. The upper portion 103a also integrates the three mounting brackets 112a-c with the recesses 114 in which the rubber mounts 113 are to be inserted.

The upper portion 103a comprises two inlet tubes 110 for sucking air from the vacuum tank (not shown). The inlet tubes 110 are connected to the side wall 108a of the upper portion 103a and each inlet tube 110 is in fluid communication with a respective inlet hole 125 of a corresponding pump chamber, through an intermediate conduct 126 housed in the intermediate chamber 120. While in Figure 3B the intermediate conduct 126 is entirely housed in the upper portion 103a, in some other embodiments the intermediate conduct 126 may be partially housed in the upper portion 103a and partially housed in the lower portion 103b of the intermediate flange 103. In some other embodiments, the inlet holes 125 may also be placed in the stators 104 of the pump chambers in which case a first part of the intermediate conduct 126 may be housed in the intermediate chamber 120 and a second part may exist outside the intermediate chamber 120 to connect with the inlet holes 125 of the respective pump chambers.

The upper portion 103a further comprises outlet holes 127 located in correspondence with the pump chambers. These outlet holes 127 are in fluid communication with their respective pump chambers and with the intermediate chamber 120. Preferably, the intermediate chamber is placed beneath and facing the outlet holes 127 such that the outlet holes 127 open directly in this intermediate chamber 120.

While the vacuum control system shown in figures 1 to 3 has a particular geometry and incorporates two vacuum pumps, two inlet tubes and an intermediate flange with a substantially oval shape and intermediate conducts to fluidly communicate the inlet tubes with the pump chambers, the vacuum control system may have any other geometry and may incorporate a different number of vacuum pumps that may be coupled to each other by an intermediate flange or that may be mechanically independent from each other. In turn the intermediate flange may have different shapes, a different number of inlet tubes or may be a solid piece with no inner conducts.

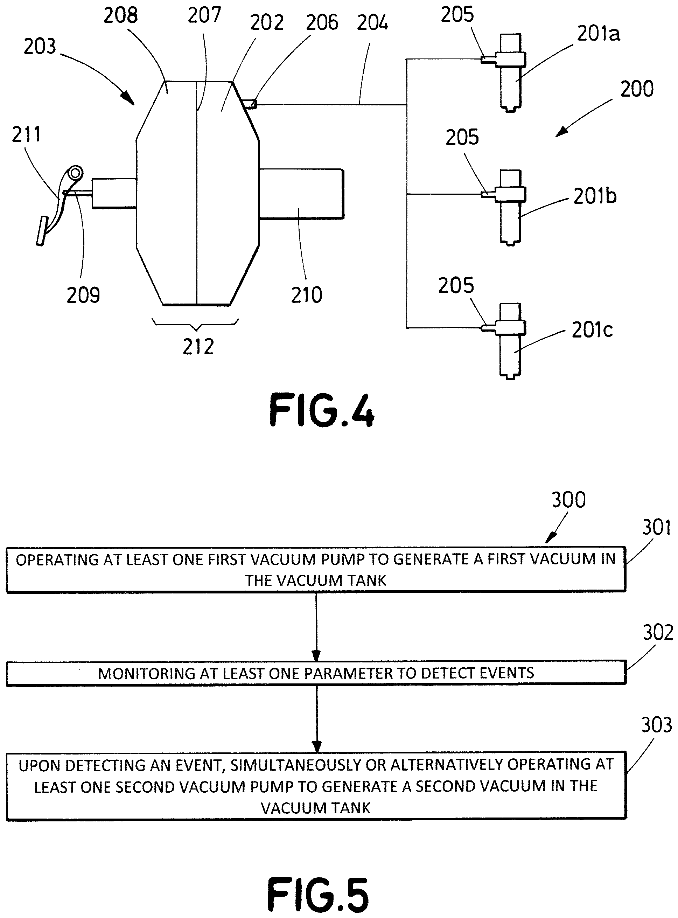

Figure 4 shows a schematic view of a vacuum control system 200 according to another embodiment of the invention. This vacuum control system 200 comprises three vacuum pumps 201a-c fluidly connected in parallel to the brake booster vacuum chamber 202 (in such example, the vacuum tank 212 is formed by the brake booster vacuum chamber 202 and a brake booster pressure chamber 208) of a brake booster 203 of a vehicle (not shown in this figure). It should be understood that the vacuum control system 200 depicted in Figure 4 may include additional components and that some of the components described herein may be removed and/or modified without departing from a scope of the vacuum control system 200.

The three vacuum pumps 201a-c are mechanically independent from each other, i.e., they are not coupled to each other by an intermediate flange, and may be located in different spaces and with different orientations within the engine compartment of the vehicle. In addition, the three vacuum pumps 201a-c are fluidly connected to the vacuum tank 212 of the brake booster 203 by respective flexible vacuum lines 204, e.g., flexible tubes, that interconnect the inlet tubes 205 of the vacuum pumps 201a-c with the vacuum connection 206, e.g., an inlet tube, of the brake booster 203. In such embodiment, the vacuum lines 204 may comprise non-return valves or bypass valves in order to let the airflow pass from the vacuum tank 212 towards the corresponding vacuum pumps 201a-c based on operation of each of the vacuum pumps 201a-c and to prevent airflow in the opposite direction.

In turn, the brake booster 203 shows the diaphragm 207 that separates the brake booster vacuum chamber 202 and a brake booster pressure chamber 208 that contains atmospheric pressure only when an air valve is opened by brake pedal 211 movement. By pressing the brake pedal 211 the push rod 209 is moved inwardly which allows air to enter in the brake booster pressure chamber 208. This change of pressure moves the diaphragm 207 inwardly which moves pistons of the hydraulic subsystem 210 to perform braking of the vehicle. The brake fluid for the wheels of the vehicle is pumped from the hydraulic subsystem 210 due to the braking effort of the driver that press the brake pedal 211 and the amplification of the driver pedal effort generated by the vacuum stored in the brake booster vacuum chamber 202 and the pressure difference between chambers 208 and 202.

In such example, the ECU may be coupled to any one of the vacuum pumps 201a-c or may be coupled to any other element of the engine compartmented the vehicle but communicatively connected to the vacuum pumps 201a-c and to the flow control means. The ECU will be configured to decide the operation mode of the vacuum pumps 201a-c, alternate or simultaneous operating mode, and may decide which vacuum pump 201a-c should be operated.

Figure 5 shows a flow diagram of the method 300 for generating vacuum in a vacuum tank, e.g., the vacuum of a brake booster, using the vacuum control system 100 of Figure 1, according to a particular embodiment of the invention.

The method 300 comprises operating 301, by the ECU 117, the first vacuum pump 101 to generate a first vacuum in the vacuum tank the vacuum control system 100 is connected to. The ECU receives 302, continuously or at predefined period of time, at least one signal representing at least one parameter to monitor at least one event. For example, the parameter may be related to the vacuum level in the vacuum tank, a vacuum demand, the start of the vehicle, the current status (available, disabled, malfunctioning, vacuum pump operating under extreme conditions, etc.) of the plurality of the vacuum pumps 101,102, measures gathered by measuring and control devices, such as sensors, communicatively coupled to the vacuum control system 100 or current status (available, disabled, malfunctioning) of the measuring and control devices, among others. The ECU 117, in response to detecting a particular event based on the received parameters, simultaneously or alternatively operates 303 the second vacuum pump 102 to generate a second vacuum in the vacuum tank. Thus, the vacuum control system 100, by simultaneously or alternatively operate the two vacuum pumps 101,102, is able to adapt vacuum generation to the event detected, and thus, to the vacuum demand of the vehicle.

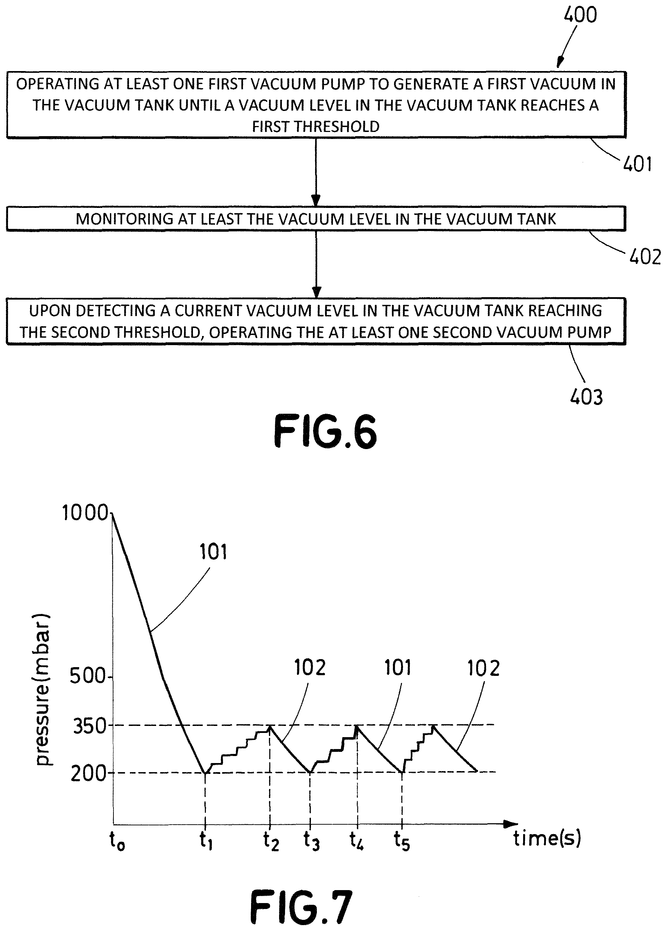

Figure 6 shows a flow diagram of a method 400 for generating vacuum in a vacuum tank, e.g., in the vacuum tank of a brake booster, using the alternate operation mode, according to a particular embodiment of the invention.

The method 400 comprises operating 401, by an ECU, at least one first vacuum pump of the plurality of vacuum pumps to generate a first vacuum in the vacuum tank until a vacuum level in the vacuum tank reaches a first threshold corresponding to the targeted vacuum level. When the first threshold is reached the ECU deactivates the at least one first vacuum pump. Then, the vacuum control system, that is monitoring 402 by the ECU 117 the vacuum level of the vacuum tank and eventually other parameters and signals received from devices of the vehicle other than the vacuum sensor of the vacuum tank, detects an event related to said vacuum level, the status of the vacuum pumps, etc. In response to detecting said event, e.g., the vacuum level falling below a second threshold corresponding to the minimum vacuum level, the vacuum control system operates 303, by means of the ECU 117, at least one second vacuum pump of the plurality of vacuum pumps to generate a second vacuum in the vacuum tank until the vacuum level in the vacuum tank reaches the first threshold. This operating mode alternates the functioning of the vacuum pumps. Since the one or more vacuum pumps used for reaching the first threshold are deactivated once the vacuum tank has reached its targeted vacuum level, when the vacuum level lowers to its minimum vacuum level other vacuum pumps, different from the vacuum pumps used to previously reach the first threshold, are operated to recover said targeted vacuum level. This operating mode may, for example, extend the operational life of the vacuum pumps and thus, of the vacuum control system.

The vacuum control system 100 may also operate the vacuum pumps 101,102 as described in Figure 5 when it is detected that the vacuum pump being operated is operating under extreme conditions (e.g., the temperature at the ECU or the vacuum pump is high enough to affect its performance) or when it is detected that the vacuum pump being operated has reached a predefined number of working hours or switches. In such cases, the at least one vacuum pump being operated may be deactivated after reaching the first threshold and a different at least one vacuum pump may be operated next time the vacuum level lowers to its minimum vacuum level.

Figure 7 shows a graph of the operation of the vacuum control system of Figure 1 in its alternate operating mode.

When the brake system is switched on (at the same time the vehicle is started), the pressure in the vacuum tank, e.g., the vacuum tank of the brake booster may be the atmospheric pressure (1000 mbar), that is equivalent to say that the vacuum level inside the vacuum tank is zero, or there may be a residual or partial vacuum level in the vacuum tank of the brake booster. At this moment (t₀), the vacuum control system 100 operates the first vacuum pump 101 until the vacuum level inside the vacuum tank reaches (t₁) the first threshold, 200 mbar, that is the targeted vacuum level. Then, the vacuum control system 100 deactivates the first vacuum pump 101. The driver pushes the brake pedal during normal driving operation of the vehicle such that the vacuum level inside the vacuum tank decreases. The measurement of the current vacuum level in the vacuum tank is periodically sent by the vacuum sensor to the vacuum control system 100. When this vacuum level falls below (t₂) the second threshold, 350 mbar of absolute pressure, corresponding to the minimum vacuum level, the vacuum control system 100 operates the second vacuum pump 102 until the vacuum level inside the vacuum tank reaches (t₃) the first threshold, 200 mbar of absolute pressure, again. Then, the vacuum control system 100 deactivates the second vacuum pump 102. In this way, the vacuum control system alternates operation of both vacuum pumps every time the vacuum level in the vacuum tank reaches the first threshold extending the operational life (compensate wear of components of the vacuum pumps and allow the motors to cool down and the cumulative time each vacuum pump has been operated) of the vacuum pumps.

In those embodiments in which there are more than two vacuum pumps, the ECU will decide which pump or pumps to operate at any moment based on which was the last vacuum pump operated.

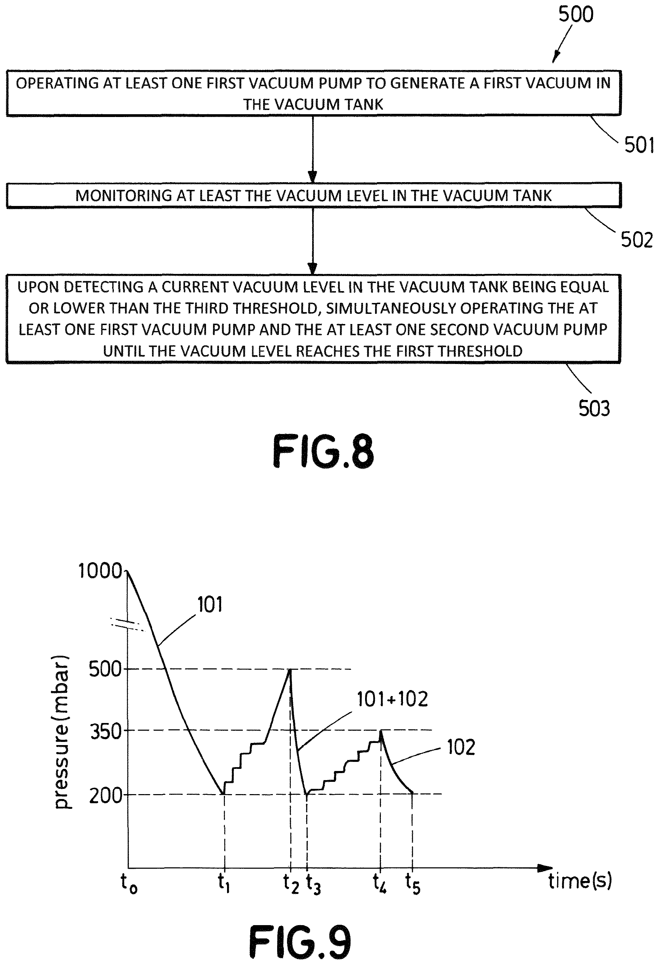

Figure 8 shows a flow diagram of a method 500 for generating vacuum in a vacuum tank, e.g., the vacuum tank of a brake booster, using the simultaneous operation mode, according to a particular embodiment of the invention.

The method 500 comprises operating 501, by an ECU, at least one vacuum pump of the plurality of vacuum pumps to generate a first vacuum in the vacuum tank. The vacuum control system monitors 502, by the ECU, at least the vacuum level in the vacuum tank and eventually other parameters and signals received from devices of the vehicle other than the vacuum sensor of the vacuum tank, to detect an event related to said vacuum level, a vacuum demand, the start of the vehicle, the status of the vacuum pumps, a reception of signals from the measuring and control devices (e.g., signals received from measurement or control sensors sending data to the vacuum control system) or the status of said measuring and control devices (e.g., a failure in any of these sensors from which the vacuum control system receives control or measurement signals),etc. In response to detecting a current vacuum level in the vacuum tank that is equal or lower than a third threshold corresponding to a predefined critical vacuum level, said third threshold being lower than the second threshold that corresponds to the minimum vacuum level, the vacuum control system simultaneously operates 503 the at least one first vacuum pump and the at least one second vacuum pump of the plurality of vacuum pumps until the vacuum level in the vacuum tank reaches the first threshold, i.e., the targeted vacuum level.

Figure 9 shows a graph of the operation of the vacuum control system 100 of Figure 1 in its simultaneous operating mode.

When the brake system is switched on (t₀), the pressure in the vacuum tank, e.g., the vacuum tank of the brake booster, may be the atmospheric pressure (1000 mbar) or there may be a residual or partial vacuum level in the vacuum tank. Then, the vacuum control system 100 operates the first vacuum pump 101 until the vacuum level inside the vacuum tank reaches (t₁) the first threshold, 200 mbar of absolute pressure. Then, the vacuum control system 100 deactivates the first vacuum pump 101. The driver pushes the brake pedal during normal driving operation of the vehicle such that the vacuum level inside the vacuum tank decreases. Due to, for example, sudden brakes of the vehicle, the vacuum level in the vacuum tank drops below the second threshold, reaching (t₂) a third threshold corresponding to a pressure inside the vacuum tank of 500 mbar of absolute pressure. Since this current vacuum level is far below the minimum vacuum level, 350 mbar of absolute pressure, which cannot ensure proper functioning of the braking system, and in order to recover the first threshold in the shortest period of time, the vacuum control system 100 simultaneously operates the first and second vacuum pumps 101,102 until the vacuum level inside the vacuum tank reaches (t₃) the first threshold again. Then, the vacuum control system 100 deactivates both vacuum pumps 101,102. After reaching the first threshold, and unless the vacuum level in the vacuum tank lowers to the third threshold again or another event occurs that triggers the simultaneous operation mode, the vacuum control system will operate in its alternate operating mode as described in Figure 6.

The vacuum control system 100 may also operate the vacuum pumps 101,102 as described in Figure 8 when it receives at least one signal indicating an emergency brake. Upon reception of a signal informing about a projected need of vacuum that may anticipate an imminently drop in the vacuum level due the emergency brake, the vacuum control system 100 may simultaneously operate the first vacuum pump 101 and the second vacuum pump 102 until the vacuum level in the vacuum tank reaches the first threshold. For example, the signal may be received from the collision warning system or the obstacle detection system of the vehicle, among others. In this way, the vacuum control system anticipates an imminent and abrupt reduction of the vacuum level in the vacuum tank. Similarly, the vacuum control system 100 may also operate the vacuum pumps 101,102 as described in Figure 8 when it detects a partial failure (e.g., generates less vacuum than expected due to a malfunctioning, an abnormal voltage received at the vacuum pump, etc.) of the vacuum pump that is currently being operated or the vacuum pumps are operating under extreme conditions which may affect its performance. In this way, the vacuum control system 100 may combine the operation of the partiallyoperative pump with a fully-operative vacuum pump in order to reach the targeted vacuum level.

The vacuum control system 100 may also operate the vacuum pumps 101,102 as described in Figure 8 when it receives at least one signal from devices, such as measurement or control sensors, which are communicatively coupled to the vacuum control system 100. For example, the signal received from the speed measurement sensor of the vehicle indicating thar the vehicle is moving at high speed may trigger the simultaneous operation mode of the vacuum control system 100. Besides a total or particle failure of any of these measurement or control sensors may trigger the simultaneous operation mode of the vacuum control system 100. For example, if the vacuum sensor fails, the system 100 may trigger the simultaneous operation mode in order to ensure that the vacuum level is high enough to guarantee the correct functioning of the systems receiving vacuum for the vacuum tank.

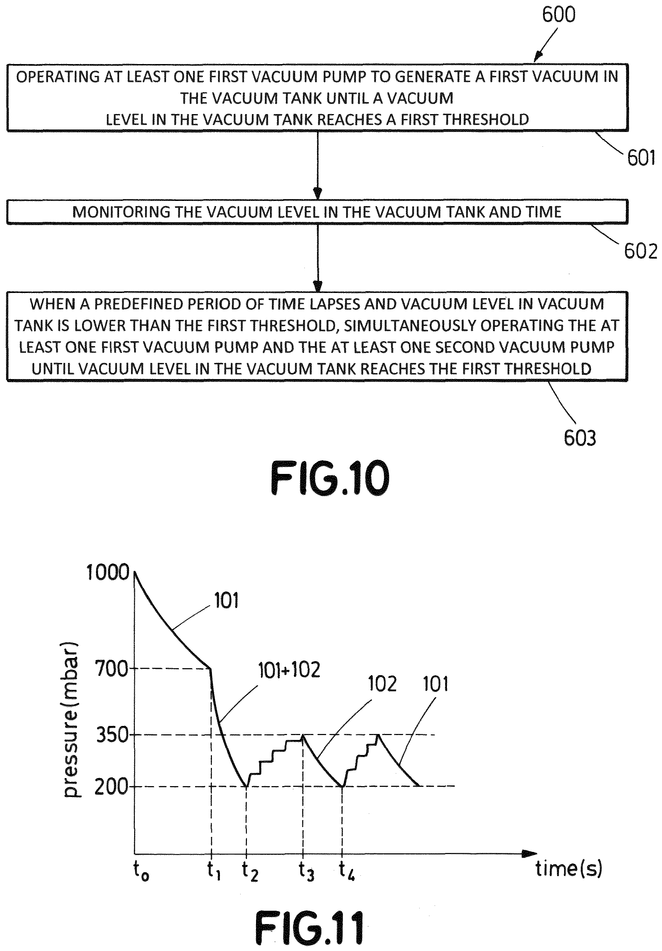

Figure 10 shows a flow diagram of a method 600 for generating vacuum in a vacuum tank of, for example a vacuum tank of a brake booster, according to another particular embodiment of the invention.

The method 600 comprises operating 601, by an ECU, at least one first vacuum pump of the plurality of vacuum pumps to generate a first vacuum in the vacuum tank until a vacuum level in the vacuum tank reaches the first threshold corresponding to the targeted vacuum level. Then, the vacuum control system monitors 602, by the ECU, the vacuum level in the vacuum tank of the brake booster and time to detect an event. When a predefined period of time has lapsed and the current vacuum level in the vacuum tank is lower than the first threshold, the vacuum control system simultaneously operates 603 the at least one first vacuum pump and the at least one second vacuum pump of the plurality of vacuum pumps until the vacuum level in the vacuum tank reaches the first threshold. The combined vacuum generation capability of the vacuum pumps will ensure the targeted vacuum level is reached as quickly as possible.

Figure 11 shows a graph of the operation of the vacuum control system 100 of Figure 1 in its simultaneous mode and further monitoring time.

The vacuum control system 100 comprises a timer to monitor time. When the brake system is switched on (t₀), the pressure in the vacuum tank may be the atmospheric pressure (1000 mbar) or there may a residual or partial vacuum in the vacuum tank. Then, the vacuum control system operates the first vacuum pump 101 to reach the first threshold, 200 mbar of absolute pressure. At the same time (t₀), the vacuum control system triggers the timer to monitor the predefined period of time, e.g., 5 seconds. If the first vacuum pump 101 is able to reach the first threshold within the 5 seconds, then the vacuum control system 100 operates both vacuum pumps 101,102 in its alternate operating mode as describe in Figure 6. However, if the 5 seconds period lapses (t₁) and the current vacuum level in the vacuum tank is lower than the first threshold, for example there is an absolute pressure of 700 mbar in the vacuum tank, the vacuum control system simultaneously operates both vacuum pumps 101,102 until the vacuum level in the vacuum tank reaches (t₂) the first threshold, 200 mbar of absolute pressure. After reaching the first threshold the vacuum control system will operate in its alternate operating mode as described in Figure 6 and reinitiate the timer such that every time any of the vacuum pumps is operated, the timer will be triggered to monitor whether said vacuum pump is able to reach the first threshold within the predefined period of time. Similarly, if the vacuum control system 100 is operating in its alternate operating mode and one of the vacuum pumps is not able to reach the first threshold such that the current vacuum level is between the first and second vacuum thresholds when the predefined period of time lapses, the vacuum control system may simultaneously operate both vacuum pumps to reach the targeted vacuum level.

In any of the embodiments described above, the vacuum pumps of the vacuum control system are decoupled to each other, in other words, any electrical or mechanical failure in one of the vacuum pumps will not affect the rest of vacuum pumps of the vacuum control system.

In this text, the term "comprises" and its derivations (such as "comprising", etc.) should not be understood in an excluding sense, that is, these terms should not be interpreted as excluding the possibility that what is described and defined may include further elements, steps, etc.

## Claims

1. A vacuum control system (100) for brake boosters, comprising:
a plurality of electric vacuum pumps (101,102) fluidly connected to each other in parallel, wherein the plurality of vacuum pumps (101,102) are fluidly connectable to a common outlet port (206) of a vacuum tank (212) (203) for sucking air from the vacuum tank (212); and
a processor configured to:
operate at least one first vacuum pump of the plurality of vacuum pumps (101,102) to generate a first vacuum in the vacuum tank (212); and
upon detecting an event, operate at least one second vacuum pump of the plurality of vacuum pumps (101,102) in an alternate mode with the at least one first vacuum pump to generate a second vacuum in the vacuum tank (212), the event being related to at least one of an instant vacuum demand, a vacuum level in the vacuum tank (212), an operation of the vacuum pumps (101,102), a reception of signals from devices communicatively coupled to the vacuum control system (100) and an operation of the devices; or
upon detecting an event, simultaneously operate the at least one second vacuum pump to generate a second vacuum in the vacuum tank (212) with the at least one first vacuum pump, the event being selected from a group comprising: a starting of a vehicle incorporating the vacuum control system (100), a reception of a signal indicating an emergency brake of the vehicle, a projected vacuum level within the vacuum tank (212) reaching a critical vacuum level, the at least one first vacuum pump operating under extreme conditions and a total or particle failure of measurement or control sensors of the vacuum control system (100).

2. The vacuum control system according to claim 1, wherein the processor is configured to simultaneously or alternatively operate the at least one second vacuum pump of the plurality of vacuum pumps (101,102) until a targeted vacuum level in the vacuum tank (212) is reached.

3. The vacuum control system (100) according to any one of the preceding claims, wherein when the event is selected from a group comprising:
a failure in a vacuum pump of the at least one first vacuum pump (101,102),
at least one vacuum pump having reached a predefined number of working hours or switches; and
a current vacuum level within the vacuum tank (202) falls below a minimum vacuum level, the minimum vacuum level being lower than the targeted vacuum level,
the processor is configured to operate the at least one second vacuum pump and disable the at least one first vacuum pump.

4. The vacuum control system (100) according to any one of the preceding claims, comprising a vacuum sensor located in the vacuum tank (212) of the brake booster (203), the vacuum sensor being configured to measure the current vacuum level in the vacuum tank (212).

5. The vacuum control system (100) according to any one of the preceding claims, comprising flow control means configured to control airflow from the vacuum tank (212) to the corresponding vacuum pumps of the plurality of vacuum pumps based on operation of the corresponding vacuum pumps (101,102).

6. The vacuum control system (100) according to any one of the preceding claims, wherein the processor is integrated into an electronic control unit (117) that is configured to receive measures from at least the vacuum sensor and from a timer and to operate the at least one first vacuum pump and the at least one second vacuum pump of the plurality of vacuum pumps (101,102) based on the received measures and the detected events.

7. The vacuum control system (100) according any one of the preceding claims, wherein the targeted vacuum level corresponds to 200 mbar of absolute pressure in the vacuum tank (212) and the minimum vacuum level corresponds to 350 mbar of absolute pressure in the vacuum tank (212).

8. A method for generating vacuum for a brake booster, comprising:
a plurality of electric vacuum pumps (101,102) fluidly connected to each other in parallel, wherein the plurality of vacuum pumps (101,102) are fluidly connectable to a common outlet port (206) of a vacuum tank (212) (203) for sucking air from the vacuum tank (212);
wherein the method comprises the steps of:
operating (301) at least one first vacuum pump of the plurality of vacuum pumps (101,102) to generate a first vacuum in the vacuum tank (212); and
upon detecting (302) an event, operating (303) at least one second vacuum pump of the plurality of vacuum pumps (101,102) in an alternate mode with the at least one first vacuum pump to generate a second vacuum in the vacuum tank (212), wherein the events are related to at least one of an instant vacuum demand, a vacuum level in the vacuum tank (212), an operation of the vacuum pumps (101,102), a reception of signals from devices communicatively coupled to the vacuum control system (100) and an operation of the devices or
upon detecting (302) an event, simultaneously operating (303) the at least one second vacuum pump to generate a second vacuum in the vacuum tank (212) with the at least one first vacuum pump, the event being selected from a group comprising: a starting of a vehicle incorporating the vacuum control system (100), a reception of a signal indicating an emergency brake of the vehicle, a projected vacuum level within the vacuum tank (212) reaching a critical vacuum level, the at least one first vacuum pump operating under extreme conditions and a total or particle failure of measurement or control sensors of the vacuum control system (100).

9. The method according to claim 8, wherein the step of simultaneously or alternatively operating at least one second vacuum pump of the plurality of vacuum pumps (101,102) comprises operating the vacuum pumps until a targeted vacuum level in the vacuum tank (212) is reached.

10. The method according to claim 8 or 9, wherein when the event is selected from a group comprising:
a failure in a vacuum pump of the at least one vacuum pump;
at least one vacuum pump having reached a predefined number of working hours or switches; and
a current vacuum level within the vacuum tank (212) falls below a minimum vacuum level within the vacuum tank (212), the minimum vacuum level being lower than the targeted vacuum level,
the method comprises operating (403) the at least one second vacuum pump and disabling the at least one first vacuum pump.

11. The method according to claim 10, when the processor detects a failure in a vacuum pump of the plurality of vacuum pumps, the method comprises triggering an alarm informing of the failure in the vacuum pump.

12. The method according to claims 8 to 11, wherein prior to operating (301) at least one first vacuum pump of the plurality of vacuum pumps to generate a first vacuum in the vacuum tank (202), the method comprises monitoring detection of an event to trigger the operation of the at least one first vacuum pump.

## Patentansprüche

1. Ein Vakuumkontrollsystem (100) für Bremskraftverstärker, umfassend:
eine Mehrzahl an elektrischen Vakuumpumpen (101, 102), welche fluidtechnisch miteinander parallel verbunden sind, wobei die Mehrzahl an Vakuumpumpen (101, 102) fluidtechnisch mit einem gemeinsamen Ausgangsanschluss (206) eines Vakuumtanks (212) (203) verbindbar sind, um Luft aus dem Vakuumtank (212) abzusaugen; und
einen Prozessor, der eingerichtet ist, zum:
Betreiben wenigstens einer ersten Vakuumpumpe der Mehrzahl an Vakuumpumpen (101, 102), um ein erstes Vakuum in dem Vakuumtank (212) zu erzeugen; und
nach Erfassen eines Vorfalls, Betreiben wenigstens einer zweiten Vakuumpumpe der Mehrzahl an Vakuumpumpen (101, 102) in einem alternativen Modus mit der wenigstens einen ersten Vakuumpumpe, um ein zweites Vakuum in dem Vakuumtank (212) zu erzeugen, wobei der Vorfall sich wenigstens bezieht auf einen plötzlichen Vakuumbedarf, ein Vakuumniveau in dem Vakuumtank (212), einen Betrieb der Vakuumpumpen (101, 102), ein Empfangen von Signalen von Geräten, die kommunikationsmäßig mit dem Vakuumkontrollsystem (100) gekoppelt sind und ein Betrieb der Geräte; oder
nach Erfassen eines Vorfalls, gleichzeitiges Betreiben der wenigstens einen zweiten Vakuumpumpe, um ein zweites Vakuum in den Vakuumtank (212) mit der wenigstens einen ersten Vakuumpumpe zu erzeugen, wobei der Vorfall aus einer Gruppe ausgewählt ist, welche umfasst: ein Starten eines Fahrzeugs, welches das Vakuumkontrollsystem (100) umfasst, ein Empfangen eines Signals, welches eine Notbremsung des Fahrzeugs angibt, ein projiziertes Vakuumlevel innerhalb des Vakuumtanks (212), welches ein kritisches Vakuumlevel erreicht, dass die wenigstens eine erste Vakuumpumpe unter extremen Bedingungen betrieben wird und einen vollständigen oder teilweisen Fehler einer Messung oder von Kontrollsensoren des Vakuumkontrollsystems (100).

2. Das Vakuumkontrollsystem nach Anspruch 1, wobei der Prozessor eingerichtet ist, gleichzeitig oder alternativ die wenigstens eine zweite Vakuumpumpe der Mehrzahl an Vakuumpumpen (101, 102) zu betreiben, bis ein Ziel-Vakuumlevel in dem Vakuumtank (212) erreicht ist.

3. Das Vakuumkontrollsystem (100) nach einem der vorhergehenden Ansprüche, wobei, wenn der Vorfall ausgewählt ist aus der Gruppe, die umfasst:
einen Fehler in einer Vakuumpumpe der wenigstens einen Vakuumpumpe;
wenigstens eine Vakuumpumpe hat eine vordefinierte Anzahl an Betriebsstunden oder Schaltungen erreicht; und
ein aktuelles Vakuumlevel innerhalb des Vakuumtanks (212) fällt unter ein minimales Vakuumlevel, wobei das minimale Vakuumlevel geringer als das Ziel-Vakuumlevel ist,
der Prozessor eingerichtet ist, die wenigstens eine zweite Vakuumpumpe zu betreiben und die wenigstens eine erste Vakuumpumpe abzustellen.

4. Das Vakuumkontrollsystem (100) nach einem der vorhergehenden Ansprüche, umfassend einen Vakuumsensor, der in dem Vakuumtank (212) des Bremskraftverstärkers (203) angeordnet ist, wobei der Vakuumsensor eingerichtet ist, das aktuelle Vakuumlevel in dem Vakuumtank (212) zu messen.

5. Das Vakuumkontrollsystem (100) nach einem der vorhergehenden Ansprüche, umfassend Strömungskontrollmittel, welche eingerichtet sind, eine Luftströmung von dem Vakuumtank (212) zu den korrespondierenden Vakuumpumpen der Mehrzahl an Vakuumpumpen basierend auf dem Betrieb der korrespondierenden Vakuumpumpen (101, 102) zu kontrollieren.

6. Das Vakuumkontrollsystem (100) nach einem der vorhergehenden Ansprüche, wobei der Prozessor in eine elektronische Kontrolleinheit (117) integriert ist, welche eingerichtet ist, Messungen von wenigstens dem Vakuumsensor und einem Timer zu empfangen und die wenigstens eine erste Vakuumpumpe und die wenigstens eine zweite Vakuumpumpe der Mehrzahl an Vakuumpumpen (101, 102) basierend auf den empfangenen Messungen und den erfassten Vorfällen zu betreiben.

7. Das Vakuumkontrollsystem (100) nach einem der vorhergehenden Ansprüche, wobei das Ziel-Vakuumlevel 200 mbar eines absoluten Drucks in dem Vakuumtank (212) entspricht und das minimale Vakuumlevel 350 mbar eines absoluten Drucks in dem Vakuumtank (212) entspricht.

8. Ein Verfahren zum Erzeugen eines Vakuums für einen Bremskraftverstärker, umfassend:
eine Mehrzahl an elektrischen Vakuumpumpen (101, 102), welche fluidtechnisch miteinander parallel verbunden sind, wobei die Mehrzahl an Vakuumpumpen (101, 102) fluidtechnisch mit einem gemeinsamen Ausgangsanschluss (206) eines Vakuumtanks (212) (203) verbindbar sind, um Luft aus dem Vakuumtank (212) abzusaugen;
wobei das Verfahren die folgenden Schritte umfasst:
Betreiben (301) wenigstens einer ersten Vakuumpumpe der Mehrzahl an Vakuumpumpen (101, 102), um ein erstes Vakuum in den Vakuumtank (212) zu erzeugen; und
nach Erfassen (302) eines Vorfalls, Betreiben (303) wenigstens einer zweiten Vakuumpumpe der Mehrzahl an Vakuumpumpen (101, 102) in einem alternativen Modus mit der wenigstens einen ersten Vakuumpumpe, um ein zweites Vakuum in dem Vakuumtank (212) zu erzeugen, wobei die Vorfälle sich wenigstens beziehen auf: einen plötzlichen Vakuumbedarf, ein Vakuumniveau in dem Vakuumtank (212), einen Betrieb der Vakuumpumpen (101, 102), ein Empfangen von Signalen von Geräten, die kommunikationsmäßig mit dem Vakuumkontrollsystem (100) gekoppelt sind, und ein Betrieb der Geräte oder
nach Erfassen (302) eines Vorfalls, gleichzeitiges Betreiben (303) der wenigstens einen zweiten Vakuumpumpe, um ein zweites Vakuum in den Vakuumtank (212) mit der wenigstens einen ersten Vakuumpumpe zu erzeugen, wobei der Vorfall aus einer Gruppe ausgewählt ist, welche umfasst: ein Starten eines Fahrzeugs, welches das Vakuumkontrollsystem (100) umfasst, ein Empfangen eines Signals, welches eine Notbremsung des Fahrzeugs angibt, ein projiziertes Vakuumlevel innerhalb des Vakuumtanks (212), welches ein kritisches Vakuumlevel erreicht, dass die wenigstens eine erste Vakuumpumpe unter extremen Bedingungen betrieben wird und einen vollständigen oder teilweisen Fehler einer Messung oder von Kontrollsensoren des Vakuumkontrollsystems (100).

9. Das Verfahren nach Anspruch 8, wobei der Schritt des gleichzeitigen oder alternativen Betreibens der wenigstens einen zweiten Vakuumpumpe der Mehrzahl an Vakuumpumpen (101, 102) ein Betreiben der Vakuumpumpen, bis zum Erreichen eines Ziel-Vakuumlevels in dem Vakuumtank (212) umfasst.

10. Das Verfahren nach Anspruch 8 oder 9, wobei, wenn der Vorfall ausgewählt ist aus der Gruppe, die umfasst:
einen Fehler in einer Vakuumpumpe der wenigstens einen Vakuumpumpe;
wenigstens eine Vakuumpumpe hat eine vordefinierte Anzahl an Betriebsstunden oder Schaltungen erreicht; und
ein aktuelles Vakuumlevel innerhalb des Vakuumtanks (212) fällt unter ein minimales Vakuumlevel, wobei das minimale Vakuumlevel geringer als das Ziel-Vakuumlevel ist,
das Verfahren ein Betreiben (403) der wenigstens einen zweiten Vakuumpumpe und ein Abstellen der wenigstens einen ersten Vakuumpumpe umfasst.

11. Das Verfahren nach Anspruch 10, wobei, wenn der Prozessor einen Fehler in einer Vakuumpumpe der Mehrzahl an Vakuumpumpen erfasst, das Verfahren ein Auslösen eines Alarms, welcher über den Fehler in der Vakuumpumpe informiert, umfasst.

12. Das Verfahren nach einem der Ansprüche 8 bis 11, wobei vor dem Betreiben (301) der wenigstens einen ersten Vakuumpumpe der Mehrzahl an Vakuumpumpen, um das erste Vakuum in dem Vakuumtank (202) zu erzeugen, das Verfahren ein Überwachen des Erfassens eines Vorfalls, um den Betrieb der wenigstens einen ersten Vakuumpumpe auszulösen, umfasst.

## Revendications

1. Système de contrôle de vide (100) pour les servofreins, comprenant :
une pluralité de pompes à vide électriques (101,102) connectées en parallèle entre elles de façon fluidique, la pluralité de pompes à vide (101,102) pouvant être connectées de façon fluidique à un port de sortie commun (206) d'un réservoir à vide (212) (203) pour aspirer l'air du réservoir à vide (212) ; et
un processeur configuré pour :
faire fonctionner au moins une première pompe à vide de la pluralité de pompes à vide (101,102) pour générer un premier vide dans le réservoir à vide (212) ; et
à la détection d'un événement, faire fonctionner au moins une deuxième pompe à vide de la pluralité de pompes à vide (101,102) en mode alterné avec ladite au moins une première pompe à vide pour générer un deuxième vide dans le réservoir à vide (212), l'événement étant lié à au moins l'un des éléments suivants : une demande de vide instantanée, un niveau de vide dans le réservoir à vide (212), un fonctionnement des pompes à vide (101,102), une réception de signaux provenant de dispositifs couplés en communication au système de contrôle de vide (100) et un fonctionnement de ces dispositifs ; ou,
à la détection d'un événement, faire fonctionner simultanément ladite au moins une deuxième pompe à vide pour générer un deuxième vide dans le réservoir à vide (212) avec ladite au moins une première pompe à vide, l'événement étant choisi dans un groupe comprenant : un démarrage d'un véhicule incorporant le système de contrôle de vide (100), une réception d'un signal indiquant un freinage d'urgence du véhicule, un niveau de vide projeté dans le réservoir à vide (212) atteignant un niveau de vide critique, ladite au moins une première pompe à vide fonctionnant dans des conditions extrêmes et une défaillance totale ou partielle des capteurs de mesure ou de contrôle du système de contrôle du vide (100).

2. Système de contrôle de vide (100) selon la revendication 1, dans lequel le processeur est configuré pour faire fonctionner simultanément ou de façon alternée ladite au moins une deuxième pompe à vide de la pluralité de pompes à vide (101,102) jusqu'à atteindre un niveau de vide ciblé dans le réservoir à vide (212).

3. Système de contrôle de vide (100) selon l'une quelconque des revendications précédentes, dans lequel lorsque l'événement est sélectionné dans un groupe comprenant :
une défaillance dans une pompe à vide de ladite au moins une première pompe à vide (101,102),
au moins une pompe à vide ayant atteint un nombre prédéfini d'heures de travail ou de commutations ; et
un niveau de vide actuel dans le réservoir à vide (202) passe en dessous d'un niveau de vide minimum, le niveau de vide minimum étant inférieur au niveau de vide ciblé,
le processeur est configuré pour faire fonctionner ladite au moins une deuxième pompe à vide et désactiver ladite au moins une première pompe à vide.

4. Système de contrôle de vide (100) selon l'une quelconque des revendications précédentes, comprenant un capteur de vide situé dans le réservoir de vide (212) du servofrein (203), le capteur de vide étant configuré pour mesurer le niveau de vide actuel dans le réservoir de vide (212).

5. Système de contrôle de vide (100) selon l'une quelconque des revendications précédentes, comprenant des moyens de contrôle du flux configurés pour contrôler le flux d'air provenant du réservoir à vide (212) vers les pompes à vide correspondantes de la pluralité de pompes à vide en fonction du fonctionnement des pompes à vide correspondantes (101,102).

6. Système de contrôle de vide (100) selon l'une quelconque des revendications précédentes, dans lequel le processeur est intégré dans une unité de contrôle électronique (117) qui est configurée pour recevoir des mesures provenant au moins du capteur de vide et d'un minuteur, et pour faire fonctionner ladite au moins une première pompe à vide et ladite au moins une deuxième pompe à vide de la pluralité de pompes à vide (101,102) en fonction des mesures reçues et des événements détectés.

7. Système de contrôle de vide (100) selon l'une quelconque des revendications précédentes, dans lequel le niveau de vide ciblé correspond à 200 mbar de pression absolue dans le réservoir à vide (212), et le niveau de vide minimum correspond à 350 mbar de pression absolue dans le réservoir à vide (212).

8. Procédé pour générer un vide pour un servofrein, comprenant :
une pluralité de pompes à vide électriques (101,102) connectées en parallèle entre elles de façon fluidique, la pluralité de pompes à vide (101,102) pouvant être connectées de façon fluidique à un port de sortie commun (206) d'un réservoir à vide (212) (203) pour aspirer l'air du réservoir à vide (212) ;
le procédé comprenant les étapes consistant à :
faire fonctionner (301) au moins une première pompe à vide de la pluralité de pompes à vide (101,102) pour générer un premier vide dans le réservoir à vide (212) ; et
à la détection (302) d'un événement, faire fonctionner (303) au moins une deuxième pompe à vide de la pluralité de pompes à vide (101,102) en mode alterné avec ladite au moins une première pompe à vide pour générer un deuxième vide dans le réservoir à vide (212), les événements étant liés à au moins l'un des éléments suivants : une demande de vide instantanée, un niveau de vide dans le réservoir à vide (212), un fonctionnement des pompes à vide (101, 102), une réception de signaux provenant de dispositifs couplés en communication au système de contrôle de vide (100) et un fonctionnement de ces dispositifs ou,
à la détection (302) d'un événement, faire fonctionner simultanément (303) ladite au moins une deuxième pompe à vide pour générer un deuxième vide dans le réservoir à vide (212) avec ladite au moins une première pompe à vide, l'événement étant choisi dans un groupe comprenant : un démarrage d'un véhicule incorporant le système de contrôle de vide (100), une réception d'un signal indiquant un freinage d'urgence du véhicule, un niveau de vide projeté dans le réservoir à vide (212) atteignant un niveau de vide critique, ladite au moins une première pompe à vide fonctionnant dans des conditions extrêmes et une défaillance totale ou partielle des capteurs de mesure ou de contrôle du système de contrôle du vide (100).

9. Procédé selon la revendication 8, dans lequel l'étape consistant à faire fonctionner simultanément ou de façon alternée ladite au moins une deuxième pompe à vide de la pluralité de pompes à vide (101,102) comprend le fait de faire fonctionner les pompes à vide jusqu'à atteindre un niveau de vide ciblé dans le réservoir à vide (212).

10. Procédé selon la revendication 8 ou 9, dans lequel lorsque l'événement est sélectionné dans un groupe comprenant :
une défaillance dans une pompe à vide de ladite au moins une pompe à vide ;
au moins une pompe à vide ayant atteint un nombre prédéfini d'heures de travail ou de commutations ; et
un niveau de vide actuel dans le réservoir à vide (212) passe en dessous d'un niveau de vide minimum dans le réservoir à vide (212), le niveau de vide minimum étant inférieur au niveau de vide ciblé,
le procédé comprend l'étape consistant à faire fonctionner (403) ladite au moins une deuxième pompe à vide et là désactiver ladite au moins une première pompe à vide.

11. Procédé selon la revendication 10, lorsque le processeur détecte une défaillance dans une pompe à vide de la pluralité de pompes à vide, le procédé comprend l'étape consistant à déclencher une alarme informant de la défaillance de la pompe à vide.

12. Procédé selon les revendications 8 à 11, dans lequel avant de faire fonctionner (301) au moins une première pompe à vide de la pluralité de pompes à vide pour générer un premier vide dans le réservoir à vide (202), le procédé comprend l'étape consistant à surveiller la détection d'un événement pour déclencher le fonctionnement de ladite au moins une première pompe à vide.
